# EUROPEAN PATENT APPLICATION

(11) **EP 3 016 477 A1**
(43) Date of publication of application: **04.05.2016**
(21) Application number: 14190692.5
(22) Date of filing: 28.10.2014
(51) Int. Cl.: H05B 33/08, H05B 37/02, F21S 10/02

(54) **Method and controller for controlling illumination in an indoor space**

(71) Applicant: Helvar Oy Ab, 03600 Karkkila (FI)
(72) Inventor: Juslèn, Henri, 03600 KARKKILA (FI); Brax, Matti, 03600 KARKKILA (FI)
(74) Representative: Berggren Oy Ab

(57) **Abstract**

Illumination in an indoor space is controlled by producing a sequence of pseudorandom values, and for a duration determined by a first value in said sequence, feeding electric current to one or more light sources according to a first current distribution scheme to produce illumination with a first emission spectrum. For a duration determined by a second value in said sequence, electric current is fed to said one or more light sources according to a second current distribution scheme, which is different from said first current distribution scheme, to produce illumination with a second emission spectrum that is different from said first emission spectrum. These steps are repeated so that each time a new value from said sequence is used to determine the duration.

## Description

### FIELD OF THE INVENTION

The invention concerns the field of controlling artificially produced illumination. Especially the invention concerns a method and a control device that enable producing advantageous psychophysiological effects in human occupants of an artificially illuminated indoor space.

### BACKGROUND

The amount and quality of artificially produced lighting is widely known to have a pronounced effect on both the subjectively experienced well-being and objectively measurable performance of people who spend a significant proportion of their time indoors. For example, the amount of light in general and the amount of bluish light in particular control the natural production of melatonin in the pineal gland of the human brain, which in turn affects the circadian rhythm, also known as the sleep-wake cycle. A large number of other, more subtle effects on human behavior related to the amount and quality of light have been observed.

Deliberately introduced changes in the amount and quality of artificially produced lighting have been suggested in a large number of prior art documents. The changes can be classified into straightforward changes of lighting intensity and more elaborate changes in intensity distribution. The first-mentioned refers typically to changes in luminous flux or luminous power, which is the measure of perceived power of light. Changes in intensity distribution mean that the relative proportions of visible light at different wavelengths are changed. For example, tuning from a "warm" white light towards a "cool" white light means increasing the relative amount of light in the shorter wavelength regions of the visible light spectrum. The established vocabulary is somewhat confusing, because what the human observer characterizes as "cooler" white light would actually originate from a hotter blackbody radiator.

A prior art document US 2010/0060195 A1 discloses a light source and a light irradiating device for regulating a biological rhythm of a user without changing a color temperature of the light, an average color-matching index, or both. It suggests using a blue emitter that emits light with major energy in a wavelength region adjacent to a wavelength to minimize a value of M(λ)/z(λ), where M(λ) is a relative sensitivity of an antisecretory characteristic of melatonin and z(λ) is a relative sensitivity of a color matching function. It also suggests using another blue emitter that emits its major energy in a different wavelength, a red emitter, a green emitter, a diffusing plate, and a controller. The system accepts input information on adjustment of the degree of biological reaction of each emitter, information on an illumination color temperature and the like.

Another prior art document DE 20 2005 001 730 U1 discloses an illumination arrangement with illumination means to which a varying control signal is supplied. The control signal causes a change in the intensity of light emitted by the illumination means, however so that the change is imperceptible to the human visual sense. Typically the control signal is derived from a music source, and the aim is to improve the sense of well-being of the affected person.

Despite the numerous efforts of previous inventors it appears that the most optimal way of controlling artificially produced light to produce a positive psychophysiological effect is yet to be found. An optimal solution should involve factors such as easy implementation, wide adaptability to different environments, and effectiveness in producing the desired results. A particular drawback of many prior art solutions is the relatively complicated way of configuring and controlling that is needed, especially if the solution is to be applied in an office, school, or similar environment where a large number of luminaires may appear in a common indoor space or in an arrangement of indoor spaces that are closely linked together.

### SUMMARY

It is an object of the present invention to provide a method and a control device for controlling illumination in an indoor space so that positive psychophysiological effects are produced in human users, while the arrangement remains simple to install and operate.

The objects of the invention are reached with a method, a control device, and a computer program as defined by the respective independent claims.

According to an example embodiment, a method for controlling illumination in an indoor space is provided. The method comprises:
feeding electric current to one or more light sources according to a current distribution scheme to produce illumination with an emission spectrum, and
making changes in the current distribution scheme to produce illumination with a different emission spectrum;
   wherein pseudorandomness is involved in at least one of the following ways:
a pseudorandom duration of time during which electric current is fed to said one or more light sources according to a particular current distribution scheme;
a pseudorandom extent of change made in the current distribution scheme;
a pseudorandom duration of time during which an essentially continuous change is made in the current distribution scheme;
a pseudorandom selection, among a set of predefined current distribution schemes, of the current distribution scheme used to produce illumination with said different emission spectrum.

According to another example embodiment, a controller for controlling illumination in an indoor space is provided. The controller comprises
- a random value generator for generating pseudorandom values, and
- a command output for giving operating commands to one or more drivers of light sources,
wherein the controller is configured to apply a produced pseudorandom value to at least one of the following:
deciding a pseudorandom duration of time during which electric current is fed to said one or more light sources according to a particular current distribution scheme;
deciding a pseudorandom extent of change made in the current distribution scheme;
pseudorandomly selecting a duration of time during which an essentially continuous change is made in the current distribution scheme;
pseudorandomly selecting, among a set of predefined current distribution schemes, a current distribution scheme used to produce illumination with said different emission spectrum.

According to yet another example embodiment, a computer program for controlling illumination in an indoor space is provided. The computer program comprises machine-readable instructions stored on a non-transitory medium that, when executed by a processor, cause the implementation of
feeding electric current to one or more light sources according to a current distribution scheme to produce illumination with an emission spectrum, and
making changes in the current distribution scheme to produce illumination with a different emission spectrum;
wherein pseudorandomness is involved in at least one of the following ways:
a pseudorandom duration of time during which electric current is fed to said one or more light sources according to a particular current distribution scheme;
a pseudorandom extent of change made in the current distribution scheme;
a pseudorandom duration of time during which an essentially continuous change is made in the current distribution scheme;
a pseudorandom selection, among a set of predefined current distribution schemes, of the current distribution scheme used to produce illumination with said different emission spectrum.

The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described hereinbefore for the computer program in accordance with an example embodiment.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF DRAWINGS

Fig. 1 illustrates a method according to an embodiment of the invention,
fig. 2 illustrates changes between conditions where the Sun is at different positions in relation to clouds,
fig. 3 illustrates a method according to an embodiment of the invention,
fig. 4 illustrates an example of changes in emission spectrum,
fig. 5 illustrates various strategies of changing the color temperature of light during the day,
fig. 6 illustrates a method according to an embodiment of the invention,
fig. 7 illustrates changes in color temperature when executing a method according to fig. 6,
fig. 8 illustrates a lighting system according to an embodiment of the invention, and
fig. 9 illustrates an example of a control panel.

### DETAILED DESCRIPTION OF EMBODIMENTS OF THE INVENTION

During a vast majority proportion of the evolutional development of the human race the daily occurrence of natural daylight has been a major factor in affecting and regulating human behavior. According to the guiding principle of evolution, those features and natural behavioristic models have prevailed that take the best advantage of natural daylight. It is plausible to assume that artificial lighting, which does not have the characteristics of natural daylight, may somehow contradict with naturally developed interaction mechanisms, and thus produce disadvantageous results not only in subjectively experienced well-being but also in objectively measurable performance, such as productivity, general alertness, and accuracy in performing detailed tasks.

One aspect of natural daylight that has been mostly overlooked is the random nature of certain variations. In particular when there are clouds in the sky, essentially randomly timed changes occur in which the perceived color and intensity of light repeatedly change from that of direct sunlight to that of more diffuse light, and back. Clouds come in different sizes and shapes, which means that not only the times between changes vary, but also the shadows of clouds may pass over the windows of a larger building in a large variety of ways. As a result, different parts of the indoor space that has windows and/or skylights experience different kinds of random variations in the incoming natural daylight. Typical artificial lighting, however, lacks this kind of changes. Working in exactly the opposite direction, so-called daylight harvesting systems use lighting sensors to detect the amount of incoming natural daylight and control the intensity of artificial lighting in an inversely proportional manner, which effectively aims at suppressing or canceling the perceived changes in luminous flux.

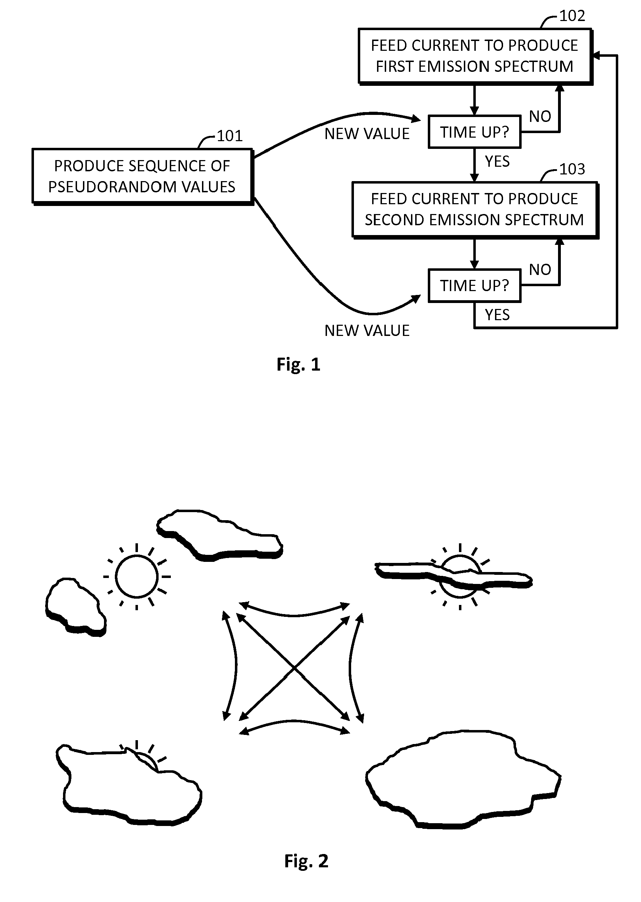

According to an aspect of the present invention, natural well-being of humans may be enhanced by controlling the illumination in the indoor space where they spend their time, in a manner that includes random variations. Fig. 1 illustrates one example of how this may be accomplished systematically in the form of a method. Fig. 1 can also be read as an illustration of a computer program, i.e. a sequence of operations that an apparatus would be caused to perform through the execution of one or more sets of machine-readable instructions that together constitute a computer program according to an embodiment of the invention.

Step 101 corresponds to producing a sequence of pseudorandom values. The term "pseudorandom" is used here to emphasize that man-made devices, especially programmable controllers of the kind typically involved in executing this kind of methods, are by nature not capable of operating in any truly random way. However, random value generators are known that produce value sequences indefinite enough to count as consisting of truly random values for all practical purposes. For the purpose of the invention it is not significant, what actual method is known to produce the sequence of pseudorandom values at step 101. For the sake of generality it is noted that the act of "producing" covers here both the actual creation of values, for example as outputs of a currently executed random value generator algorithm, and the reading from memory of pseudorandom values that have been created previously and stored into memory for later use.

Step 102 corresponds to feeding electric current to one or more light sources according to a particular current distribution scheme to produce illumination with a particular emission spectrum. This is done for a duration determined by a value in the pseudorandom sequence produced in step 101. The term current distribution scheme is used here to refer to the fact that the way in which the light source or sources produce light depends on how much electric current is made to flow through each unit that is capable of converting electric current into visible light. For the purpose of easier reference we may use the designations "first current distribution scheme" and "first emission spectrum".

As an example, we may assume that the light sources are light-emitting diodes or LEDs for short. We may further assume that there are LEDs of different emission wavelengths and/or different emission spectra; for example, there may be red, green, and blue (RGB) LEDs and/or warm white and cool white LEDs. As a simple example, a current distribution scheme may mean two relative values, of which one tells what is the (effective) value of electric current flowing through warm white LEDs and the other tells what is the (effective) value of electric current flowing through cool white LEDs. A more elaborate example of a current distribution scheme could involve the LED-chain-specific peak current values and pulse width modulation (PWM) duty cycles to be applied in chains of red, green, blue, amber, cyan, white, etc. LEDs respectively. If there is only one light source, an emission spectrum may be created by making electric current flow through it at variable magnitude and/or direction in a particular rhythm, in which case a current distribution scheme may mean values that describe such a rhythm.

The term emission spectrum refers to a collection of values that tell the radiant power per wavelength within the wavelength range of visible light, i.e. between 400 and 750 nanometres. In some embodiments of the invention the spatial distribution of light may have significance, in which case the term emission spectrum could refer to a collection of values that tell the radiant intensity per wavelength measured at a particular part of the illuminated space. Practical representation of emission spectra calls for discretizing the wavelength axis into bands, so that each value in the emission spectrum corresponds to a particular wavelength band. As an example, an emission spectrum could consist of 350 values, each representing a one-nanometre-wide wavelength band between 400 and 750 nanometres. We assume that there is unequivocal one-to-one correspondence with a current distribution scheme and the corresponding emission spectrum, so that each time the same current distribution scheme is applied, illumination with the same emission spectrum is produced.

Step 103 corresponds to feeding electric current to said one or more light sources according to a different current distribution scheme, which may be called a second current distribution scheme. This is done for a duration determined by another value in the pseudorandom sequence produced in step 101. As a result, during the execution of step 103 there is produced illumination with a second emission spectrum that is different from the first emission spectrum.

Repeating steps 102 and 103, so that each time a new value from the pseudorandom sequence is used to determine the duration, results in repeatedly changing between the production of illumination with the first and second emission spectra, so that a human observer would not perceive regularity in the changes but would assume them to occur completely at random. The execution of step 101 may be interleaved with the repeated execution of steps 102 and 103 so that each pseudorandom value of the sequence is only produced according to need, when the duration of the next electric-current-feeding step needs to be decided.

According to an embodiment of the invention the first and second emission spectra may imitate the spectrum of natural daylight with the Sun at a first or second position respectively in relation to clouds. For example, the first emission spectrum may imitate the spectrum of natural daylight with the Sun shining clearly between clouds, while the second emission spectrum may imitate the spectrum of natural daylight with the Sun hiding behind a cloud. Fig. 2 illustrates schematically a number of examples with the Sun taking various positions in relation to clouds: shining clearly between clouds, partly hiding behind a small or narrow cloud, almost completely hidden behind a larger cloud, and completely hidden behind a cloud.

Depending on the size and number of clouds in the sky and the speed of wind on the various altitudes, the durations of naturally occurring periods of the Sun either shining or hiding behind a cloud may vary in a relatively wide range. It has been observed that a majority of test persons have no reason to suspect non-natural variation if the durations of said periods are longer than five seconds and shorter than thirty minutes. Therefore, assuming that the values in the pseudorandom sequence created at step 101 signify directly durations in units of time, it is advantageous to control the creation of pseudorandom values so that the sequence consists of values larger than five seconds and smaller than thirty minutes, in order to imitate a natural sequence of clouds passing before the Sun.

Above it was already pointed out, with reference to fig. 2, that the naturally occurring variation in natural daylight during a partly cloudy day does not necessarily consist solely of variation between two ("clear" and "cloudy") emission spectra, but may comprise a number of different emission spectra corresponding to the extent to which the Sun is covered by clouds. In order to cause more variation it may be advantageous to insert between steps 102 and 103, in any order, a step of feeding electric current to said one or more light sources according to a third current distribution scheme, which is different from both the first and the second current distribution schemes, to produce illumination with a third emission spectrum that is different from both the first and the second emission spectra. This step may be executed for duration determined by a third value in the pseudorandom sequence produced in step 101.

Even more variation can be caused by adding fourth, fifth, etc. current distribution schemes and the corresponding fourth, fifth, etc. emission spectra, which are then each produced for a duration determined by a respective value in the pseudorandom sequence.

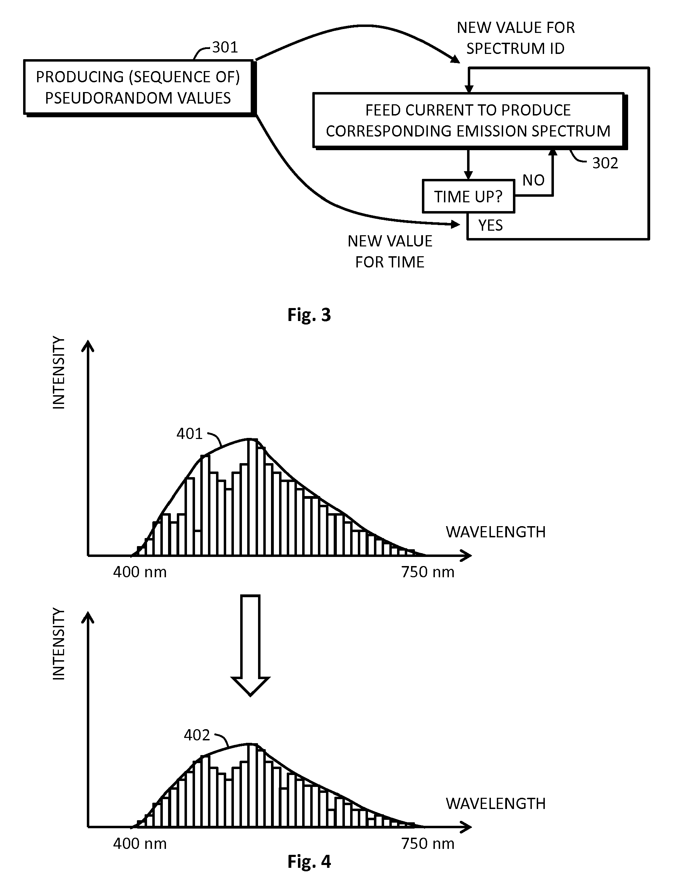

Fig. 3 illustrates an alternative implementation of a method or computer program according to embodiments of the invention. The implementation of fig. 3 is based on the principle of each time randomly drawing a new current distribution scheme, and feeding the corresponding electric current to the one or more light sources each time for a randomly drawn duration. Since the aim is to imitate naturally occurring daylight, the concept of randomly drawing a new current distribution scheme does not mean creating a new current distribution scheme completely by random, because it is unlikely that all such randomly created current distribution schemes would lead to emission spectra that resembled some naturally occurring condition in the sky. Rather, we assume that two, three, or more current distribution schemes have been created and stored, taking care that each of them leads to an emission spectrum that resembles some naturally occurring condition in the sky. Randomly drawing a new current distribution scheme then means making a random selection among these previously created and stored current distribution schemes.

It is also possible to characterize each such stored current distribution scheme with a value or descriptor that indicates the probability of the corresponding natural light spectrum occurring at various times of the day, such as morning, noon, afternoon, or evening. The randomized drawing of a new current distribution scheme could then be weighted in accordance with such values or descriptors, so that the most likely current distributions to be drawn at each time would be those that corresponded to the most likely spectra of natural light at that time of the day.

Step 301 in fig. 3 corresponds to producing pseudorandom values for use in randomly drawing current distribution schemes and for determining durations of feeding corresponding electric currents to one or more light sources. Separate pseudorandom values may be produced for the two purposes; correspondingly the concept of a sequence is only presented in parentheses in fig. 3.

Step 302 in fig. 3 corresponds to feeding electric current to one or more light sources according to a current distribution scheme, to produce illumination with an emission spectrum. The current distribution scheme has been selected in accordance with a random value received from step 301. Step 302 is executed for a duration determined by another random value received from step 301. Repeatedly obtaining these two random values from step 301 and executing step 302 accordingly results in repeating the step of feeding electric current to one or more light sources each time according to a different current distribution scheme, to produce illumination with a different emission spectrum, each time for a different duration.

Although a windy day with clouds that have sharp contours may lead to relatively fast changes in the color and intensity of natural daylight observed by a human user, changes from one spectrum of natural light to another are never quite abrupt. A human observer in an indoor space where the lighting system changed its current distribution scheme abruptly could consider the changes in lighting unnatural. Therefore any embodiment of the invention may comprise making changes between consecutive current distribution schemes as continuous transitions during a respective transition period. For example, if there are two or more light sources and the current distribution scheme involves particular amperage values of the currents flowing through each light source, a continuous transition is achieved so that the amperage value of each current is changed gradually from the old value to the new value during the transition period.

There are several ways in which the emission spectra that correspond to different current distributions may differ from each other. Fig. 4 illustrates one example. The first emission spectrum that is shown in the upper part of the drawing has a first spectral envelope 401 between wavelengths of 400 and 750 nanometres, and a first intensity distribution within said first spectral envelope 401. The emission spectrum is represented with a histogram; in other words, the wavelength axis has been discretized into bands, so that each value in the emission spectrum is reflected in the height in intensity direction of the column in the corresponding wavelength band.

The second emission spectrum is shown in the lower part of the drawing in fig. 4. It has a second spectral envelope 402 between wavelengths of 400 and 750 nanometres, and a second intensity distribution within said second spectral envelope. In this particular example the second spectral envelope 402 is an intensity-scaled version of the first spectral envelope 401, and the second intensity distribution differs from a correspondingly intensity-scaled version of the first intensity distribution at at least one wavelength band. Differences on wavelength bands are clearly seen e.g. at smaller wavelength values, where the column of almost every wavelength band reaches up to the second spectral envelope 402. The second emission spectrum could be characterized as having a lower overall intensity but a larger relative content of colors close to the violet end of the visible spectrum.

Changes in the emission spectrum may involve changes in spectral envelope and/or changes in relative intensity on particular wavelength bands independently of each other.

An interesting class of changes in emission spectra includes changes that may go completely or almost completely unnoticed by a human observer. It is not possible to define an accurate limit of what is and what is not noticeable to a human observer, because different observers have different sensitivity to changes in color and lighting and because even the same observer may react differently depending on e.g. what else he or she is concentrating on simultaneously. However, studies with large numbers of test subjects have shown that certain characterizations of typical observability can be made. For example, let us assume that the wavelength bands are relatively narrow and the difference between the first and second intensity distributions comprises a different intensity at at least one wavelength band that lies between two such wavelength bands, the peak intensities at which define adjacent points of the corresponding spectral envelope. The overall observable lighting intensity does not necessarily change a lot; only the relative amount of light of particular color changes, and even then the color the amount of which changes is between neighboring colors that remain unchanged. Many human observers, particularly ones that are simultaneously concentrating on something else that requires a lot of attention, do not spontaneously and consciously notice any change in the lighting around them.

As another example, let us assume that the first emission spectrum has a first intensity distribution and a first peak intensity value, both within a range of wavelengths from 400 to 750 nanometres, and corresponds to a first perceptible total illumination level. The second emission spectrum has a second intensity distribution and a second peak intensity value. The second intensity distribution is different from the first intensity distribution but the second peak intensity value is essentially the same as the first peak intensity value. Additionally the second emission spectrum corresponds to a second perceptible total illumination level that is essentially the same as said first perceptible total illumination level. Also in this case it is possible that a human observer does not consciously notice a change in lighting. However, in this case as well in the other example described above it is possible that the observer gets a feeling that something happened, but he or she cannot exactly say, what.

Changes in lighting that are not directly and consciously observable but yet leave the human observer with a feeling that something happened may be useful in maintaining alertness, because humans - as all animals - have a built-in tendency to subconsciously interpret them as signs of possible approaching danger, and to react, also subconsciously, by secreting hormones that increase the preparedness of the body to detect additional signs and/or to take action. Care should be exercised in applying such changes, because continuous and/or excessive exposure to factors that the body interprets as signs of danger may cause stress and related disadvantageous symptoms.

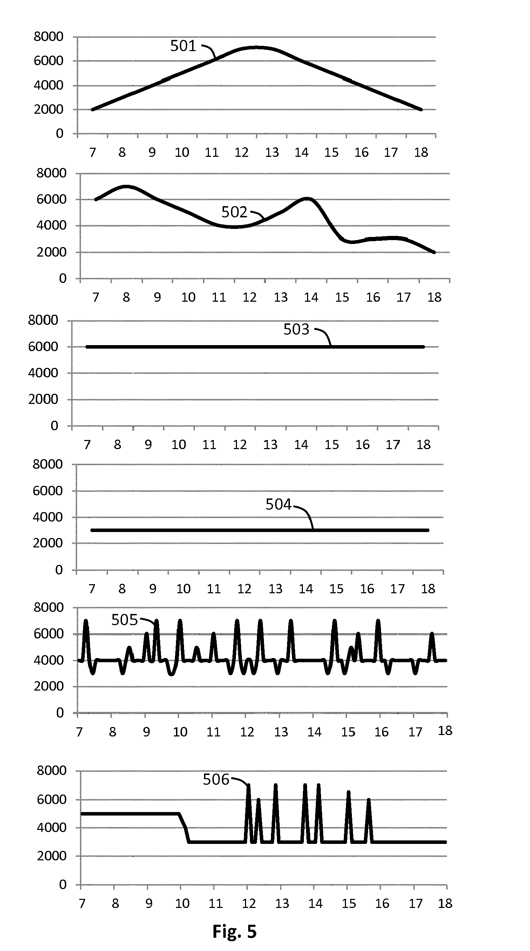

Pseudorandom changes in emission spectra can be combined with, or in some case replaced by, programmable changes that follow some other criteria. Fig. 5 illustrates some examples. In the graphs of fig. 5 each emission spectrum is only characterized by its predominant color temperature or CCT (Correlated Color Temperature), but in the view of the foregoing explanation about emission spectra it should be understood that spectra have other characteristics as well, and changes may take place with respect to all of them. The graphs of fig. 5 illustrate changes in spectra through changes in their CCT over time, beginning at 7 o'clock in the morning (07.00 AM) and ending at 18 o'clock in the evening (06.00 PM). Graph 501 could be called the "natural sky" graph, because it follows the way in which the CCT of clear sky changes during the day: at sunrise and sunset the CCT is at values that correspond to warm white, from which it rises to values of very cool white during the day.

Graph 502 represents a series of programmed changes that aim at effectively stimulating people working indoors, possibly during a dark season when even outdoors there would be only limited amounts of natural light available. A dark season may have the effect of causing so-called "winter blues", or periods of lower activity and generally negative feelings, in at least part of the people. Suitably programmed changes in the emission spectrum of artificial lighting indoors may help to relieve the symptoms of winter blues. According to graph 502 the CCT of artificial lighting is relatively high in the morning, which a human observer may experience as boosting his or her alertness. The CCT is lowered towards the middle of the working day, partly because more natural light may become available through windows so that not so much artificial lighting is needed any more, but also because otherwise the human observer would get used to the high-CCT lighting and its stimulating effect would be worn. During the afternoon another stimulating boost of high-CCT lighting is given, before allowing the lighting to become warmer which prepares the human observer for a relaxing evening.

Graph 503 illustrates lighting that is maintained at the level of bright midday light during the whole day, while graph 504 illustrates lighting that is deliberately maintained at a softer and warmer CCT level.

Graph 505 illustrates the CCT value of an emission spectrum that is repeatedly changed in a pseudorandom manner throughout the day. Consequently the graph 505 could be called the "passing clouds" graph.

Graph 506 illustrates the possibility of combining parts of the strategies shown separately in the preceding graphs. As an example, graph 506 combines the constant high-CCT lighting of graph 503 from the beginning of the day until about 10 o'clock, after which the strategy is a combination of the constant low-CCT lighting of graph 504 with pseudorandom changes as in graph 505. Such a strategy could be called the "alert me" strategy, because effective, rapid changes in the emission spectrum are given during the afternoon, when the human observer might need them the most. Within the concept of combining strategies of change, a gradual change throughout the duration of a day could be imposed on at least one current distribution scheme that is otherwise used, for imitating a diurnal change in the color of natural daylight.

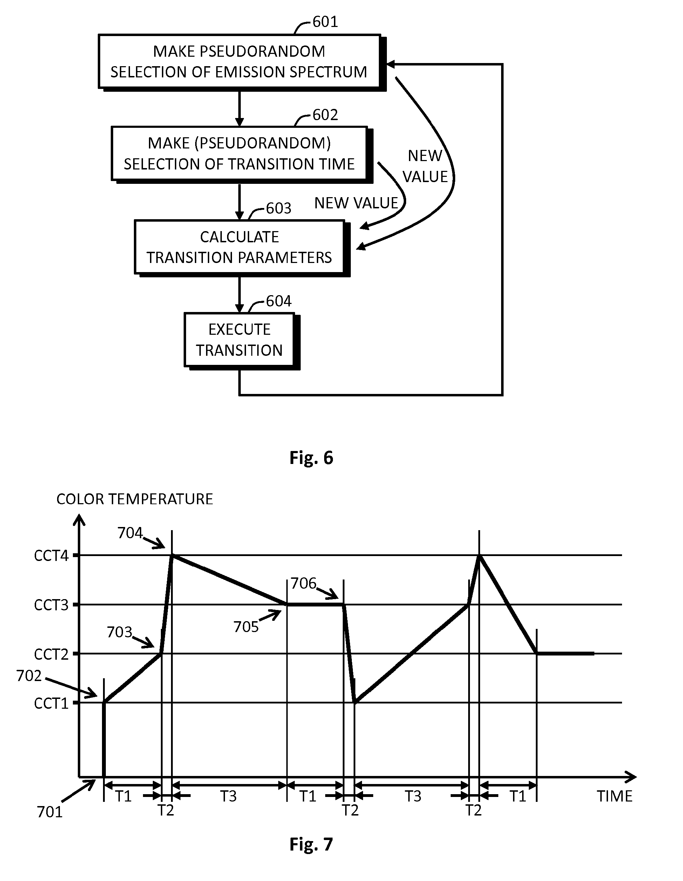

Fig. 6 illustrates another example of how the principle of random variations in indoor lighting may be accomplished systematically in the form of a method. Fig. 6 can also be read as an illustration of a computer program, i.e. a sequence of operations that an apparatus would be caused to perform through the execution of one or more sets of machine-readable instructions that together constitute a computer program according to an embodiment of the invention.

Step 601 corresponds to making a pseudorandom selection, among a set of predefined current distribution schemes, to select the current distribution scheme used to produce illumination with the next emission spectrum. A pseudorandom selection among a predefined set means that there is only a limited number of alternatives, one of which will be selected, and each alternative is as such predefined, but which of them is selected is not known beforehand; this selection is made at (pseudo)random. An electronic device will typically make such selection by dividing the range of possible pseudorandom values into as many subranges as there are alternatives in the set, assuming one subrange for each alternative, producing a pseudorandom value, and selecting that alternative the subrange of which was hit by the produced pseudorandom value.

As an alternative to making a pseudorandom selection among a set of predefined current distribution schemes one could compose (pseudorandomly) a whole new current distribution scheme at step 601, but simply making a selection involves many advantages, including but not being limited to simplicity in programming as well as the fact that each predefined current distribution scheme may have been tested beforehand and found suitable for operation.

Step 602 corresponds to pseudorandomly selecting a transition time during which the current distribution scheme selected at step 601 will be taken into use. Also the selection of time at step 602 may be made pseudorandomly: either completely freely or by making a pseudorandom selection among a set of predefined transition times.

The method of fig. 6 aims a making a gradual change from a previous current distribution scheme to the selected new current distribution scheme during the selected transition time. This may necessitate calculating some parameters, like the extent of change that needs to be made per unit time to the output current value that is directed to particular light sources. The step of calculating transition parameters is shown as step 603 in fig. 6. The actual transition is executed at step 604, after which the execution of the method returns to step 601.

Executing the method of fig. 6 may result in continuously changing the emission spectrum, at least as long as the selection the new current distribution scheme at step 601 did not happen to produce exactly the same current distribution scheme as previously. Fig. 7 illustrates a correlated color temperature that results as a function of time in a simple exemplary embodiment in which there are two light sources, one of which is configured to produce cool white light while the other is configured to produce warm white light. Selecting a current distribution scheme means in this exemplary case selecting the relative (effective) amplitudes of current directed through the cool and warm white light sources respectively, and the resulting emission spectrum means white light that has some resultant correlated color temperature.

In fig. 7 we assume that there is a set of four predefined current distribution schemes, i.e. four allowable relative divisions of current between the cool and warm white light sources. Each current distribution scheme results in the corresponding correlated color temperature CCT1, CCT2, CCT3, or CCT4 respectively.

In fig. 7 we also assume that there is a set of three predefined transition times T1, T2, and T3.

At point 701 the controller is switched on for beginning the illumination of the corresponding indoor space. In fig. 7 we assume that at start-up the controller automatically assumes the current distribution scheme that results in the correlated color temperature CCT1, as is illustrated at point 702. The controller may have been e.g. configured to automatically assume this current distribution scheme at start-up, or it may have been configured to assume the last validly selected current distribution scheme that was in use last time as switch-off.

In the exemplary case of fig. 1 the controller executes steps 601, 602, and 603 of fig. 1 at point 702. This time it happens to select the current distribution scheme resulting in CCT2 as the new current distribution scheme, and T1 as the transition time. At step 603 the controller calculates, how large change it must make per unit time in the current directed to the cool and warm white light sources respectively, so that after time T1 it will arrive at point 703. The gradual change from CCT1 to CCT2 between points 702 and 703 is the result of executing the transition according to step 604.

At points 703, 704, 705, 706, and at each breaking point of the color temperature curve even thereafter, a new round of executing steps 601, 602, and 603 takes place. It is noteworthy that at point 704 the controller has selected the current distribution scheme resulting in CCT3, but at point 705 it makes the same selection again; this results in a "null transition" for the duration of time T1 between points 705 and 706. If it is preferred that such "null transitions" occur often, i.e. that there are relatively often periods when the emission spectrum does not actually change at all, the pseudorandom selection at step 601 may be weighted so that the alternative "no change at all" has a relatively high probability to become selected.

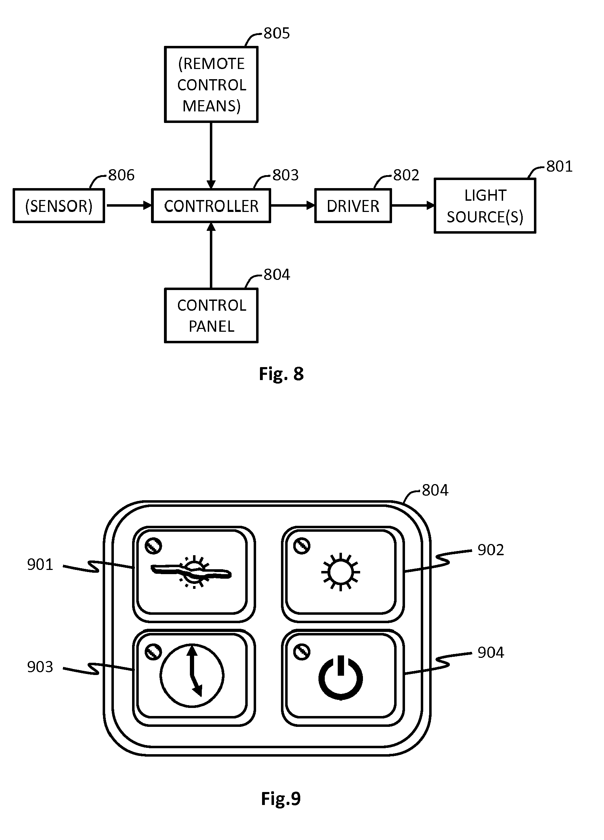

Fig. 8 is a schematic illustration of some parts that may be present in a lighting system. The light source or sources 801 are of a kind where different current distributions produce different emission spectra. For example, block 801 may comprise LEDs and/or laser diodes of different emission wavelengths, and/or equipped with different phosphors, so that the overall emission spectrum is the combination of light emitted by the LEDs and/or laser diodes and/or their phosphors. The current distributions are created in a driver 802, which may be for example a multichannel LED driver with a number of parallel output channels, the output currents of which are individually controllable.

In fig. 8 a controller 803 is shown as an entity separate from the driver 802. Physical separation is not necessary, as the functions of a controller and a driver can well be implemented in a single physical device. Logically the separation means that a controller 803 is the entity that determines, what kind of current distributions should be produced, while the driver 802 is the entity that actually produces the desired current distributions. The controller 803 is typically a programmable device that comprises one or more microprocessors and the associated memories, in which machine-readable instructions can be stored on a non-transitory medium for execution by the processor(s), and which the processor(s) may use for storing run-time data such as produced sequences of pseudorandom values. The controller 803 also comprises the interfaces that are necessary for inputting and outputting information. In particular the controller 803 comprises a random value generator for generating a sequence of pseudorandom values, and a command output for giving operating commands to one or more drivers 802 of light sources.

A control panel 804 may be coupled to one of the interfaces of the controller 803. Fig. 9 illustrates a front side of an exemplary control panel. The control panel 804 of fig. 9 offers four distinct ways of giving inputs to the controller 803. These may be for example touch-sensitive areas of a touch panel, or push buttons like in fig. 9. In the example of fig. 9 each push button is equipped with a graphical illustration that represents the signal to be conveyed to the controller by actuating that push button. Additionally the upper left corner of each push button in fig. 9 comprises an indicator light that tells, which functions are currently active. Indicating the purpose of each input means to a human user, and possibly indicating which functions are currently active, can be made also in numerous other ways, many of which are known on the technical field of controlling lighting.

In particular, pressing the upper left push button 901 instructs the controller 803 to start a routine that imitates a day with passing clouds, while pressing the upper right push button 902 instructs the controller 803 to start a "sunny day" routine. Pressing the lower left push button 903 initiates a clock-based routine or adds a clock-based element to some other, currently selected routine, and the lower right push button 904 acts as an ON/OFF switch. As an example, pressing both the "sunny day" push button 902 and the "clock" push button 903 would cause the indicator lights of both these push buttons to light up, and would instruct the controller 803 to start a routine represented by graph 501 in fig. 5.

According to an embodiment of the invention the method executed by the controller 803 comprises a step of receiving input information from the control panel 804. The input information is indicative of a selection made by the user; the controller 803 and the control panel 804 apply some suitable communications protocol to make the controller 803 aware of which button(s) the user has pressed. The steps of producing pseudorandom values and, for durations determined by a values in said sequence, repeatedly feeding electric current to one or more light sources according to respective current distribution schemes are performed as a response to said input information indicating a first selection. That selection may be for example the pressing of the upper left bush button 901. A steady lighting state is entered as a response to said information indicating a second, different selection, like pressing the upper right push button 902. The steady lighting state is one where values in said sequence do not cause changes in current distribution scheme.

The control panel 804 does not need to be an actual physical entity. If the controller 803 is equipped with suitable wireless communication means, an embodiment may be presented in which the controller 803 detects wireless communications devices, such as laptop computers, tablets, or smartphones, that are in the vicinity, and offers the control panel 804 to be displayed as an interactive graphical object on the display screen of such devices.

A lighting system that comprises light sources 801, driver 802, controller 803, and a local control panel 804 may be independent in the sense that it does not need any connections to other part of larger lighting systems or building management systems. However, such connections are not excluded by the invention, and the controller 803 may exchange commands and other digital information with such more remote systems as well. A connection to remote control means 805 is schematically shown in fig. 8.

A great deal of adaptability can be added to the operation of the lighting system shown in fig. 8 if one or more sensors 806 are provided at the disposal of the controller 803 for obtaining information about factors such as the presence and/or movements of users in the area to be illuminated; the amount of natural light or light from other artificial sources that enters the area to be illuminated; and/or the actual level of light from all possible sources that currently prevails at the area to be illuminated.

As an example we may take the use of a motion sensor that can detect movements of users. The controller 803 may make statistical analysis of the outputs of the motion sensor, and store a database of accumulated motion data. The amount of detected movement has a correlation with the alertness of employees; typically an employee who just sits at his or her desk and does not move much is also otherwise in a passive mood and could benefit from some activating stimuli. Thus the controller 803 may respond to a detected amount of movement that is lower than average by increasing the effect of lighting-based activation. For example, the controller 803 may change automatically from a steady-CCT lighting mode to a "passing clouds" mode, or begin introducing the non-noticeable or nearly non-noticeable changes in emission spectrum that were discussed earlier. Correspondingly if the controller 803 detects a higher than average amount of movement, it may interpret it as a sign that the employee(s) within the illuminated area is/are feeling restless, and react by changing the emission spectrum towards more peaceful characteristics, like steady lighting of relatively warm color.

If the controller 803 has an illumination sensor at its disposal that can detect changes in natural daylight, the controller 803 may use the output data of the sensor to synchronize its internal clock: repeatedly occurring, relatively slow cycles of increasing and decreasing daylight with a completely dark time in between are likely to reflect the course of days, with the moment of brightest daylight approximately corresponding to noon. The controller 803 may use detected changes in daylight to deduce even the latitude at which it is installed on the Earth, as well as the time of the year. The last-mentioned is advantageous if changes in emission spectrum of the produced artificial lighting are to be used to beat winter blues, because the need for such operation naturally coincides with only the darkest times of the year.

## Claims

1. A method for controlling illumination in an indoor space, comprising:
feeding electric current to one or more light sources according to a current distribution scheme to produce illumination with an emission spectrum, and
making changes in the current distribution scheme to produce illumination with a different emission spectrum;
wherein pseudorandomness is involved in at least one of the following ways:
a pseudorandom duration of time during which electric current is fed to said one or more light sources according to a particular current distribution scheme;
a pseudorandom extent of change made in the current distribution scheme;
a pseudorandom duration of time during which an essentially continuous change is made in the current distribution scheme;
a pseudorandom selection, among a set of predefined current distribution schemes, of the current distribution scheme used to produce illumination with said different emission spectrum.

2. A method according to claim 1, comprising:
a) producing a sequence of pseudorandom values,
b) for a duration determined by a first value in said sequence, feeding electric current to said one or more light sources according to a first current distribution scheme to produce illumination with a first emission spectrum,
c) for a duration determined by a second value in said sequence, feeding electric current to said one or more light sources according to a second current distribution scheme, different from said first current distribution scheme, to produce illumination with a second emission spectrum that is different from said first emission spectrum, and
d) repeating steps b) and c) so that each time a new value from said sequence is used to determine the duration.

3. A method according to claim 2, wherein:
- said first emission spectrum imitates the spectrum of natural daylight with the Sun at a first position in relation to clouds, and
- said second emission spectrum imitates the spectrum of natural daylight with the Sun at a second position, different from said first position, in relation to clouds.

4. A method according to claim 3, wherein said first emission spectrum imitates the spectrum of natural daylight with the Sun shining between clouds, and said second emission spectrum imitates the spectrum of natural daylight with the Sun hiding behind a cloud.

5. A method according to any of claims 2 to 4, wherein said sequence consists of values larger than five seconds and smaller than thirty minutes to imitate a natural sequence of clouds passing before the Sun.

6. A method according to any of claims 2 to 5, comprising inserting between steps b) and c), in any order, a step of:
e) for a duration determined by a third value in said sequence, feeding electric current to said one or more light sources according to a third current distribution scheme, different from said first and second current distribution schemes, to produce illumination with a third emission spectrum that is different from said first and second emission spectra.

7. A method according to any of claims 2 to 6, wherein changes between consecutive current distribution schemes are made as continuous transitions during a respective transition period.

8. A method according to claim 2, wherein:
- said first emission spectrum has a first spectral envelope between wavelengths of 400 and 750 nanometres and a first intensity distribution within said first spectral envelope, and
- said second emission spectrum has a second spectral envelope between wavelengths of 400 and 750 nanometres and a second intensity distribution within said second spectral envelope, of which the second spectral envelope is an intensity-scaled version of said first spectral envelope, and said second intensity distribution differs from an intensity-scaled version of said first intensity distribution at at least one wavelength band.

9. A method according to claim 8, wherein the difference between said first intensity distribution and said second intensity distribution comprises a different intensity at at least one wavelength band that lies between two such wavelength bands, the peak intensities at which define adjacent points of the corresponding spectral envelope.

10. A method according to claim 2, wherein:
- said first emission spectrum has a first intensity distribution and a first peak intensity value, both within a range of wavelengths from 400 to 750 nanometres, and corresponds to a first perceptible total illumination level,
- said second emission spectrum has a second intensity distribution and a second peak intensity value, of which the second intensity distribution is different from said first intensity distribution but said second peak intensity value is essentially the same as the first peak intensity value, and said second emission spectrum corresponds to a second perceptible total illumination level that is essentially the same as said first perceptible total illumination level.

11. A method according to claim 1, comprising:
making a pseudorandom selection, among a set of predefined current distribution schemes, to select the current distribution scheme used to produce illumination with said different emission spectrum,
selecting a transition time during which the selected current distribution scheme will be taken into use, and
making a gradual change from a previous current distribution scheme to the selected current distribution scheme during the selected transition time.

12. A method according to claim 11, in which the step of selecting a transition time involves making a pseudorandom selection among a set of predefined transition times.

13. A method according to any of the previous claims, comprising a step of receiving input information indicative of a selection made by the user, wherein the method involving pseudorandomness is performed as a response to said input information indicating a first selection, and a steady lighting state is entered as a response to said information indicating a second, different selection, said steady lighting state being one where no pseudorandom changes are made in current distribution scheme.

14. A method according to any of the previous claims, in which a gradual change throughout the duration of a day is imposed on at least one current distribution scheme that is used, for imitating a diurnal change in the color of natural daylight.

15. A controller for controlling illumination in an indoor space, comprising:
- a random value generator for generating pseudorandom values, and
- a command output for giving operating commands to one or more drivers of light sources,
wherein the controller is configured to apply a produced pseudorandom value to at least one of the following:
deciding a pseudorandom duration of time during which electric current is fed to said one or more light sources according to a particular current distribution scheme;
deciding a pseudorandom extent of change made in the current distribution scheme;
pseudorandomly selecting a duration of time during which an essentially continuous change is made in the current distribution scheme;
pseudorandomly selecting, among a set of predefined current distribution schemes, a current distribution scheme used to produce illumination with said different emission spectrum.

16. A computer program for controlling illumination in an indoor space, comprising machine-readable instructions stored on a non-transitory medium that, when executed by a processor, cause the implementation of
feeding electric current to one or more light sources according to a current distribution scheme to produce illumination with an emission spectrum, and
making changes in the current distribution scheme to produce illumination with a different emission spectrum;
wherein pseudorandomness is involved in at least one of the following ways:
a pseudorandom duration of time during which electric current is fed to said one or more light sources according to a particular current distribution scheme;
a pseudorandom extent of change made in the current distribution scheme;
a pseudorandom duration of time during which an essentially continuous change is made in the current distribution scheme;
a pseudorandom selection, among a set of predefined current distribution schemes, of the current distribution scheme used to produce illumination with said different emission spectrum.
